# FASCICULE DE BREVET EUROPEEN

(11) **EP 4 065 338 B1**
(45) Date de publication et mention de la délivrance du brevet: **02.08.2023**
(21) Numéro de dépôt: 20811377.9
(22) Date de dépôt: 27.11.2020
(51) Int. Cl.: B29C 49/78, B29C 49/42, B29C 49/58, B29C 49/06, B29C 49/36, B29C 49/12, B29C 49/16, B29C 49/24, B29K 67/00, B29L 31/00

(54) **DISPOSITIF ET PROCEDE DE TRAITEMENT DE CORPS CREUX**
VORRICHTUNG UND VERFAHREN ZUR BEHANDLUNG VON HOHLKÖRPERN
DEVICE AND METHOD FOR TREATING HOLLOW BODIES

(30) Priorité: 29.11.2019 FR 1913437
(43) Date de publication de la demande: 05.10.2022
(73) Titulaire: Sidel Participations, 76930 Octeville-sur-Mer (FR)
(72) Inventeur: PASQUIER, Hervé, 76930 OCTEVILLE SUR MER (FR); DELAUNAY, Arnaud, 76930 OCTEVILLE SUR MER (FR)
(74) Mandataire: Sidel Group
(86) Numéro de dépôt international: PCT/EP2020/083618
(87) Numéro de publication internationale: WO 2021/105348

(56) Documents cités:
- EP-A1- 3 530 431
- DE-A1-102017 114 138
- US-A1- 2009 306 830
- US-A1- 2013 187 304
- US-A1- 2016 332 357

## Description

L'invention concerne le traitement de corps creux notamment le formage de récipient en matière plastique par soufflage à partir d'ébauche ou le revêtement barrière réalisé à l'intérieur du récipient. De tels dispositifs et procédés de traitement de corps creux sont décrits dans les documents brevets EP3530431A1, US2016/332357A1 et US2013/187304A1.

Préférentiellement, mais non limitativement, la matériau plastique peut être du PET (pour « polytéréphtalate d'éthylène).

Dans la suite de la description, il faut entendre le terme « corps creux » comme étant soit un récipient, une préforme, ou une ébauche.

Un tel récipient prend la forme d'une bouteille ou d'un flacon, en matériau plastique, rigide ou semi-rigide. Ce récipient est destiné à servir de conteneur, de façon non exhaustive, à un fluide, un liquide, des poudres ou des granulés, notamment de type agroalimentaire ou cosmétique.

De manière connue, au sein d'une ligne industrielle, les récipients peuvent recevoir plusieurs traitements successifs différents, allant de la fabrication du contenant par une opération de soufflage ou d'étirage-soufflage jusqu'au conditionnement en lots de plusieurs récipients regroupés, en passant notamment par le revêtement d'une couche barrière à l'intérieur du récipient, le remplissage, la fermeture par un bouchon et l'étiquetage des produits à l'unité. A l'issue de ces traitements, les produits sont dits "finis".

L'invention concerne l'étape de fabrication visant le formage par soufflage de récipient.

Génériquement, ce formage d'un récipient est obtenu à partir d'une ébauche, qui est soit une préforme, soit un récipient intermédiaire. Le formage fait intervenir un fluide sous pression qui est soufflé à l'intérieur de l'ébauche, préalablement chauffée et positionnée dans un moule, en vue d'appliquer une déformation plastique jusqu'à obtenir le récipient voulu, en fonction de la forme dudit moule. Le formage de récipient s'effectue donc au travers d'une opération de soufflage, ou bien d'étirage-soufflage, dans un moule, d'ébauche avec un fluide sous pression, en particulier de l'air.

Un tel formage intervient au travers d'une machine de fabrication comportant généralement une unité de conditionnement thermique d'ébauche, communément appelé « four », suivie d'une unité de soufflage pourvue de plusieurs postes de soufflage communément appelés « stations de soufflage ». Plus avant, chaque poste est monté tournant à la périphérie d'un carrousel rotatif. Chaque poste comprend un moule, dans lequel chaque ébauche est introduite, en provenance du four, afin de subir une opération de transformation en récipient lors d'une étape de soufflage, à savoir notamment des étapes intermédiaires, telles qu'une étape de présoufflage combinée à une étape d'étirage, une étape de soufflage, une étape de dégazage associée parfois à une étape récupération de fluide.

Le formage de récipients, tels que des bouteilles en matière plastique, par soufflage d'ébauches est bien connue. Avant d'être soufflée pour être conformée en récipient, l'ébauche subit un traitement thermique approprié dans un four de conditionnement thermique. Ce traitement thermique peut être plus ou moins sophistiqué en fonction des caractéristiques du récipient à obtenir. Il consiste en tous les cas à chauffer la matière plastique de l'ébauche à une température supérieure à sa température de transition vitreuse pour permettre sa déformation par soufflage ou par étirage soufflage.

L'ébauche est ensuite placée dans un moule contenant une cavité conformée à l'empreinte du récipient à obtenir puis, au cours d'une étape de transformation par soufflage, un fluide de soufflage, généralement de l'air sous haute pression, typiquement à une pression comprise entre 18 et 40 bars (1 bar équivaut à 100000 Pascal), est injecté à l'aide d'une tuyère dans l'ébauche pour la gonfler et plaquer la matière contre les parois intérieures du moule, ce qui permet d'obtenir le récipient. De préférence, l'opération de transformation peut inclure une étape d'étirage ou d'élongation de l'ébauche à l'aide d'une tige d'élongation qui est associée au moule et est commandée en coulissement vers le fond de l'ébauche et/ou une étape de présoufflage (typiquement à une pression entre 8 et 15 bars).

Après un certain temps de contact de la matière plastique contre le moule, on dégaze le récipient formé par une étape de dégazage, en ramenant la pression dans le récipient à la pression atmosphérique avant d'évacuer le récipient final du moule. Dans d'autres procédés, l'étape de dégazage est précédée d'une étape de récupération d'une partie du fluide contenu dans le récipient, afin de le réinjecter en vue d'autres utilisations (dans la machine elle-même ou dans l'usine où la machine est installée).

Le fonctionnement d'une machine de soufflage est relativement complexe notamment en raison du nombre important de paramètres à prendre en considération et susceptibles d'influencer la qualité du récipient obtenu.

Il est connu, par exemple comme décrit dans le document WO 2008/081107, de corréler des points singuliers de mesures d'une courbe réelle de soufflage avec des paramètres donnés de la machine (notamment le débit ou la pression de présoufflage), en vue d'appliquer des corrections des paramètres en fonction de divergences constatées en ces points singuliers par rapport à une courbe théorique.

Toutefois, certaines dérives ne peuvent être corrigées que dans une certaine mesure, notamment en adaptant certains paramètres de fonctionnement de certains composants de la machine. En effet, une ou des dérives occasionnées par la détérioration ou le vieillissement, prématuré, ou non, d'un ou de plusieurs organes, notamment mécaniques ou pneumatiques, présents dans la machine et qui sont essentiels au déroulement du procédé de fabrication ne peuvent pas être corrigées, ou seulement n'être corrigées que de façon limitée, en outre par un procédé de régulation. C'est tout parti-culièrement le cas lors de la détérioration ou du vieillissement de certains composants, comme les électrovannes présentes dans la machine, ou encore lors de la détérioration par obturation de silencieux de remise à l'air libre lors du dégazage.

A ce titre, dans les machines connues de soufflage ou d'étirage soufflage, chaque poste de soufflage est agencé pour que l'intérieur du corps creux constitué par l'ébauche, au début de la séquence, puis par le récipient formé, à la fin, puisse être mis en communication dans une première étape avec un circuit de présoufflage, puis dans une seconde étape avec un circuit de soufflage, ensuite éventuellement avec un circuit de récupération de fluide de soufflage et enfin avec un circuit de dégazage (encore appelé circuit d'échappement) pour remettre l'intérieur du volume du récipient à la pression atmosphérique. La mise en communication de l'intérieur de l'ébauche, respectivement du récipient, avec les circuits de présoufflage, de soufflage, le cas échéant de récupération, et enfin de dégazage est effectuée à l'aide d'autant de vannes respectives. De telles vannes sont commandées électriquement, communément appelées « électrovannes ». Des silencieux d'échappement peuvent généralement être associés à chaque circuit d'échappement et permettent de réduire le bruit dû à la détente lors de la remise de l'intérieur du récipient à la pression atmosphérique.

Dès lors, comme évoqué précédemment, un changement survenu matériellement au niveau d'une électrovanne induit une variation dans son fonctionnement, préjudiciable au déroulement de l'opération de soufflage et au récipients ainsi fabriqués.

Une solution connue consiste à détecter un tel dysfonctionnement d'une des électrovannes. Pour ce faire, une solution connue décrite dans le document WO 2015/121557, consiste à calculer un délai effectif d'ouverture d'une électrovanne et à le comparer avec un délai théorique, afin d'émettre une alerte en cas de dépassement d'un écart maximal admissible.

Plus précisément, on informe qu'une détérioration ou qu'un vieillissement d'au moins une électrovanne est trop avancée pour pouvoir être corrigé par le procédé de régulation, en maîtrisant la durée de vie des électrovannes, en vue de programmer des opérations de maintenance pour prévenir tout arrêt de la machine et, ainsi, en optimiser le rendement. A cet effet, lors de la fabrication d'un récipient, après 1"introduction d'une ébauche dans un moule, on met en communication l'intérieur de l'ébauche avec au moins un circuit de fluide par l'intermédiaire d'une électrovanne associée audit circuit. A un instant prédéterminé, on envoie un ordre d'ouverture à ladite électrovanne qui possède un délai théorique d'ouverture, c'est-à-dire un temps qui doit théoriquement s'écouler entre l'ordre d'ouverture et l'instant où l'électrovanne s'ouvre effectivement. On envisage alors de calculer le délai effectif d'ouverture de ladite électrovanne, c'est-à-dire le temps écoulé entre l'ordre d'ouverture et un instant effectif d'ouverture de l'électrovanne. Une fois ce délai effectif calculé, une comparaison permet de déterminer si l'écart est supérieur à un écart maximal admissible, puis d'émettre une notification de dépassement.

Si une telle solution permet de détecter un dysfonctionnement d'une électrovanne, il n'apporte pas entière satisfaction, en particulier concernant la localisation de la défaillance.

A ce titre, une électrovanne comprend une vanne commandée pneumatiquement par un distributeur qui est contrôlé électriquement. Le passage d'une vanne depuis une position de fermeture vers une position d'ouverture, et inversement, s'effectue sous l'action du distributeur associé, qui reçoit un signal électrique correspondant. Le distributeur bascule alors pour autoriser ou bloquer la mise en communication d'un fluide pressurisé vers ladite vanne, ledit fluide pressurisé circulant le long d'une conduite reliant ledit distributeur à ladite vanne.

Dès lors, un dysfonctionnement d'une électrovanne peut provenir de son distributeur ou de sa vanne.

L'invention peut concerner l'étape de dépose d'un revêtement sous forme d'une couche d'un matériau à effet barrière à l'intérieur du récipient.

Génériquement, ce dépôt d'une couche d'un matériau à effet barrière à l'intérieur du récipient est obtenu par introduction d'un gaz précurseur sous très faible pression à l'intérieur du récipient, puis simultanément, le gaz précurseur présent à l'intérieur du récipient est soumis à une excitation électromagnétique micro-onde propre à engendrer un plasma provoquant le dépôt d'un matériau à effet barrière sur la paroi interne du récipient.

Un tel dépôt intervient au travers d'une machine de traitement comportant plusieurs postes de traitement identiques destinés chacun à prendre en charge au moins un récipient dans une cavité et à mettre en communication la cavité, ainsi que l'intérieur du récipient avec une source de pression notamment une source de vie, à mettre en communication l'intérieur du récipient avec une source de gaz précurseur et à exciter ce gaz précurseur à l'aide d'un générateur de micro-onde propre à engendrer un plasma provoquant le dépôt d'un matériau à effet barrière sur la paroi intérieure du récipient.

Par analogie à la machine de formage, les mises en communication réalisées dans la machine de traitement pour déposer la couche du matériau à effet barrière à l'intérieur du récipient sont réalisées également avec des électrovannes. Dès lors, de telles électrovannes présentent les mêmes inconvénients susmentionnés.

L'invention a pour but de pallier les inconvénients de l'état de la technique en proposant de déduire une défaillance de l'un ou l'autre des composants d'une électrovanne, à savoir sa vanne ou son distributeur, à partir d'une mesure de la pression entre ces composants. En particulier, l'invention prévoit de mesurer la pression dans la conduite pneumatique reliant le distributeur à sa vanne, permettant de déterminer en cas d'un différentiel constaté par rapport à une consigne, si la défaillance provient d'un délai survenu au niveau du distributeur ou au niveau de la vanne.

Pour ce faire, l'invention concerne un dispositif de traitement de corps creux, comprenant au moins :
- une tuyère débouchant à l'intérieur d'un corps creux placé à l'intérieur d'un réceptacle ;
- au moins un circuit et des moyens de mise en circulation selon au moins un sens d'au moins un flux d'air sous pression au sein dudit circuit ;
   ledit au moins un circuit comprenant :
      - au moins une vanne, reliée en amont à ladite tuyère et/ou audit réceptacle ;
      - au moins un premier capteur de pression au niveau de ladite tuyère ou au niveau dudit réceptacle, mesurant une première pression ;
   ledit dispositif comprenant encore
      - au moins un distributeur de commande de ladite au moins une vanne ;
      - une conduite reliant ledit distributeur à ladite vanne correspondante ;
      - au moins une unité de contrôle contrôlant au moins l'un des différents composants susmentionnés, ladite unité de contrôle comprenant au moins un composant de mesure temporelle.

Un tel dispositif de traitement se caractérise par le fait qu'il comprend :
- au moins un deuxième capteur de pression situé le long de ladite conduite, mesurant une deuxième pression à l'intérieur de ladite conduite ;
   et en ce que ladite unité de contrôle comprend
- des moyens aptes à déterminer au moins un différentiel entre la mesure de la première pression et la mesure de la deuxième pression en fonction du temps.

Selon des caractéristiques additionnelles, non limitatives, ledit deuxième capteur peut être un capteur de détection la présence d'une pression dans ladite conduite.

Ledit deuxième capteur peut être un capteur de mesure de la valeur d'une pression dans ladite conduite.

Ladite unité de contrôle peut comprendre des moyens aptes à comparer ledit différentiel en fonction du temps écoulé entre un première instant de la mesure de la première pression et un deuxième instant de la mesure de la deuxième pression.

Ledit dispositif de traitement peut comprendre un moule de soufflage dudit corps creux se présentant sous forme d'une préforme.

Ledit dispositif de traitement peut comprendre une cavité de réception dudit corps creux se présentant sous forme d'un récipient.

L'invention concerne aussi un procédé de traitement de corps creux, dans lequel au moins :
- on introduit un corps creux dans un réceptacle refermé par une tuyère ;
- on met en circulation un flux d'air sous pression vers l'intérieur de ladite tuyère et/ ou dudit réceptacle par actionnement d'au moins une vanne, reliée en amont à ladite tuyère ou audit réceptacle ;
- on commande l'actionnement de ladite au moins une vanne par un distributeur associé, relié à ladite vanne par une conduite ;
- on mesure une première pression au niveau de ladite tuyère.

Un tel procédé de traitement se caractérise en ce qu'
- on mesure une deuxième pression à l'intérieur de ladite conduite ;
- on calcule un différentiel entre la mesure de la deuxième pression et la mesure de la première pression ;
- en fonction du différentiel, on détermine un temps de réponse dudit distributeur et un temps de réponse de ladite vanne.

Selon des caractéristiques additionnelles, non limitatives, un tel procédé de traitement peut comprendre l'une ou l'autre des étapes suivantes :
- on mesure la deuxième pression par détection de la présence d'une pression à l'intérieur de ladite conduite.
- on mesure la deuxième pression par mesure de la valeur de ladite deuxième pression.
- en cas de dépassement d'un des temps de réponse, on émet une notification de dépassement.
- on comptabilise successivement les dépassements d'un des temps de réponse ;
- on émet une notification des dépassements comptabilisés au-delà à partir d'un seuil maximal.

Selon une première application, ledit procédé de traitement peut consister en un procédé de formage de récipient par soufflage à partir d'ébauche placée dans un moule.

Selon une autre application, ledit procédé de traitement peut consister en un procédé de dépose de couche à effet barrière à l'intérieur d'un récipient placé dans une cavité.

D'autres caractéristiques et avantages de l'invention ressortiront de la description détaillée qui va suivre des modes de réalisation non limitatifs de l'invention, en référence aux figures annexées, dans lesquelles :
[fig.1] représente schématiquement une vue selon une coupe verticale médiane d'un exemple d'un moule de formage de récipient par soufflage d'une ébauche de type préforme ;
[fig.2] représente schématiquement un exemple d'une courbe de soufflage représentative de la pression au cours du temps lors du formage d'un récipient ;
[fig.3] représente schématiquement un détail de l'exemple de la courbe de soufflage, en fin d'une étape de présoufflage, montrant notamment différents instants pris en considération ; et
[fig.4] représente schématiquement une vue selon une coupe verticale médiane d'un exemple d'une cavité de traitement pour le dépôt d'une couche d'un matériau à effet barrière à l'intérieur d'un récipient.

Dans la suite de la description des éléments présentant une structure identique ou des fonctions analogues seront désignés par une même référence.

Selon un premier aspect, l'invention concerne le formage de récipient 1 par soufflage à partir d'ébauche.

L'ébauche et le récipient obtenu par ce formage sont en matière plastique, préférentiellement du PET.

Un tel formage s'effectue au travers d'un « poste de soufflage ». Plusieurs postes peuvent être réunis ensemble, notamment en périphérie d'un carrousel rotatif, formant alors une unité de soufflage. Une telle unité de soufflage est généralement située en aval d'une unité de traitement thermique, communément appelée « four ».

Chaque poste de soufflage comprend un réceptacle sous forme d'un moule 2, dans lequel chaque ébauche est introduite, en provenance du four, afin de subir une opération de transformation en récipient 1 lors d'une étape de soufflage, à savoir notamment des étapes intermédiaires, telles qu'une étape de présoufflage combinée à une étape d'étirage, une étape de soufflage, une étape de dégazage associée parfois à une étape récupération de fluide. L'étape de soufflage est effectuée au travers d'un dispositif 3 de formage de récipient 1 par soufflage à partir d'ébauche.

A ce titre, une telle ébauche peut être une préforme 4 ou un récipient intermédiaire.

La préforme 4 comprend un corps globalement tubulaire et creux, fermé par un fond généralement hémisphérique, et ouvert du côté opposé par un col présentant une forme définitive du col du récipient 1 à obtenir.

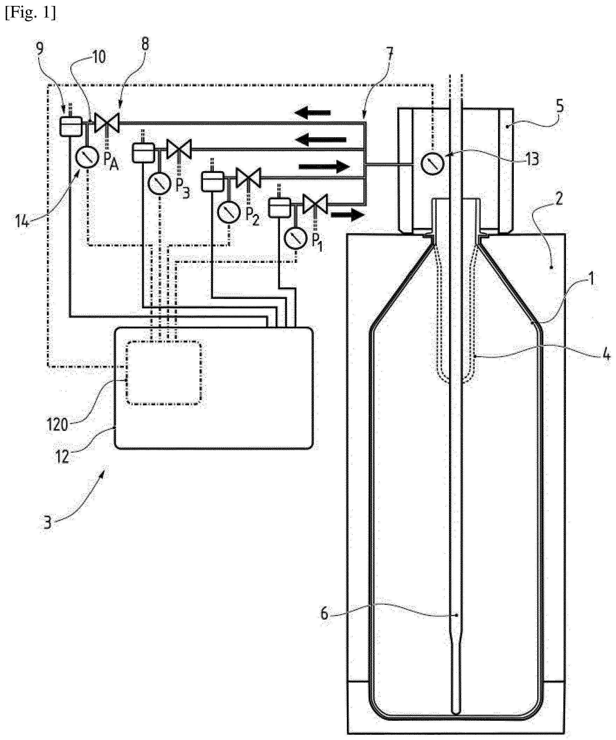

Sur la figure 1, un exemple de préforme 4 est représenté en pointillé dans un moule 2.

Afin d'assurer le formage par soufflage, le dispositif 3 comprend des moyens correspondants venant coopérer avec le moule 2, recevant l'ébauche.

Plus avant, le dispositif dispositif 3 de formage comprend au moins une tuyère 5 de soufflage, ci-après « tuyère ».

Plus avant, la tuyère 5 est montée mobile par rapport au poste de soufflage depuis une position haute et escamotée, dans laquelle l'ébauche peut être introduite dans le moule 2, vers une position basse venant coiffer l'ébauche de façon étanche avec le moule 2, et inversement.

Une telle tuyère 5 s'apparente donc à une cloche venant recouvrir la partie supérieure du moule 2, notamment le col de l'ébauche, pour permettre d'amener l'air de soufflage dans l'ébauche pour venir plaquer la matière plastique contre les parois intérieures du moule 2.

Le dispositif 3 de formage peut comprendre une tige 6 d'élongation montée mobile verticalement par rapport à la tuyère 5, depuis une position haute et escamotée, vers une position basse où l'extrémité distale de la tige 6 est en contact avec le fond du moule 2, au travers de positions intermédiaires, et inversement. La tige 6 coulisse donc par rapport audit moule 2 et à la tuyère 5, étirant longitudinalement la matière de l'ébauche sous l'effet de son déplacement vertical descendant.

On notera que des positions intermédiaires lors de la descente de la tige 6 peuvent correspondre à l'étape de présoufflage.

La figure 1 montre une tige 6 d'élongation en position basse.

Afin d'effectuer le soufflage à l'intérieure de l'ébauche, le dispositif 3 de formage comprend au moins un circuit 7 et des moyens de mise en circulation (non représentés) selon au moins un sens d'au moins un flux d'air sous pression au sein dudit circuit 7. De préférence, plusieurs flux d'air de pressions différentes sont mis en circulation à différents moments au sein dudit circuit 7, selon un sens d'injection et un sens d'extraction.

On notera que les moyens de mise en circulation peuvent être de tout type, en particulier une source de fluide connectée audit circuit 7, notamment un fluide sous pression générée par un moyen adapté, tel un compresseur ou une pompe. La source peut comprendre un réservoir conservant le fluide à la pression désirée ou directement alimenté par ledit moyen adapté.

Ledit circuit 7 est relié à la tuyère 5 et permet dans un sens l'injection de flux d'air, à savoir notamment :
- un flux d'air basse pression ou « pression de présoufflage » P1, comprise notamment entre 5 et 13 bars (1 bar = 100000 Pascal), assurant une étape de présoufflage ;
- un flux d'air haute pression ou « pression de soufflage » P2, comprise notamment entre 20 et 40 bars, assurant l'étape de soufflage.

En sens inverse, le circuit 7 permet d'extraire en sens inverse l'air sous pression contenu dans le récipient 1 une fois formé, à savoir notamment :
- lors d'une étape de récupération, qui permet de recycler une partie de l'air du flux d'air haute pression, notamment de la pression de soufflage P2 jusqu'à un seuil bas correspondant à une « pression de récupération » P3 ;
- lors d'une étape de dégazage, qui permet de mettre en communication l'intérieur de la tuyère 5 et de ce fait du récipient 1, avec l'extérieur à la pression atmosphérique PA.

Le circuit 7 comprend des portions dédiées à chaque mise en circulation du ou des flux d'air sous pression, avec des portions communes, notamment au niveau de la liaison avec la tuyère 5.

L'exemple de la figure 1 montre un circuit 7 avec une portion commune reliée à la tuyère 5 et pourvu des portions dédiées pour l'injection de la pression de présoufflage P1 et de la pression de soufflage P2, ainsi que pour l'extraction jusqu'à la pression de récupération P3 puis jusqu'à la pression atmosphérique PA. Des flèches montrent les sens de circulation de l'air le long de chacune desdites portions dédiées.

En outre, chacune des portions dédiées du circuit 7 est reliée à une source correspondante.

A ce titre, les moyens de mise en circulation permettent notamment de gérer l'ensemble des sources, la mise du ou des flux d'air à la pression correspondante. En particulier, pour le dispositif 3 de formage, la ou les sources sont approvisionnées par des compresseurs.

Par ailleurs, afin d'autoriser ou non le passage dudit au moins un flux d'air, ledit au moins un circuit 7 comprend au moins une vanne 8, reliée en amont à ladite tuyère 5.

Préférentiellement, le circuit 7 comprend autant de vannes 8 que de différents flux.

La figure 1 montre quatre vannes 8 correspondant aux portions dédiées de présoufflage, de soufflage, de récupération et de dégazage.

Afin d'assurer le contrôle de ladite au moins une vanne 8, le dispositif 3 de formage prévoit des moyens adaptés permettant d'actionner chaque vanne 8 depuis une position fermée vers une position ouverte assurant la circulation du flux d'air sous pression, et inversement.

Pour ce faire, ledit dispositif 3 de formage comprend encore au moins un distributeur 9 de commande de ladite au moins une vanne 8. En particulier, chaque vanne 8 est pourvue d'un distributeur 9 associé à son fonctionnement.

On notera que le distributeur 9 est activé électriquement, notamment par l'intermédiaire d'un bobinage qui, sous l'action d'un courant électrique, bascule le distributeur 9 en position ouverte ou en position fermée, commandant réciproquement à la commande de la position de la vanne 8 associée.

Plus avant, chaque distributeur 9 commande sa vanne 8 de façon pneumatique, par transmission d'une commande pneumatique, sous forme d'une mise en circulation d'un fluide pressurisé. C'est ce fluide pressurisé qui, lorsque le distributeur 9 est activé électriquement et bascule en position d'ouverture, commande l'actionnement la vanne 8 vers sa position d'ouverture. Lorsque le distributeur 9 est désactivé, retournant en position de fermeture, le fluide pressurisé ne circule plus et la vanne 8 retourne en position fermée. Le fonctionnement inverse peut aussi être envisagé.

Un distributeur 9 est donc un pilote électro-pneumatique de la vanne 8 associée.

Ainsi, un distributeur 9 et une vanne 8 forment alors un ensemble dit « électrovanne ». Une telle électrovanne est préférentiellement de type « tout ou rien », mais peut éventuellement être de type proportionnel.

En outre, afin de permettre la circulation du fluide pressurisé entre le distributeur 9 et la vanne 8, le dispositif 3 de formage comprend une conduite 10 reliant ledit distributeur 9 à ladite vanne 8 correspondante. Une telle conduite 10 est propre au fonctionnement de la vanne 8, située donc au sein de chaque électrovanne et en dehors du circuit 7 pour la circulation du ou des flux d'air sous pression prévus pour le soufflage du récipient 1.

Plus avant, une électrovanne possède un délai effectif 11 d'ouverture ou de fermeture, c'est-à-dire la durée qui s'écoule entre, d'une part, un premier instant t₀ où un ordre est envoyé au distributeur 9 sous forme d'un signal électrique, activant ou désactivant ledit distributeur 9, et, d'autre part, l'instant suivant t₄ où la vanne 8 est complètement ouverte ou fermée. Ce délai effectif 11 a tendance à évoluer en fonction de certains paramètres, comme le nombre de cycles auquel l'électrovanne est soumise, l'usure de certains de ses composants au fil du temps, mais aussi en raison des conditions envi-ronnementales.

Lorsqu'une électrovanne neuve sort de fabrication, elle possède un délai effectif 11 théorique, qui peut être contrôlé préalablement, notamment lors du rodage de l'installation. Ce délai effectif 11 est donc une constante connue, admise en fonction de certaines tolérances.

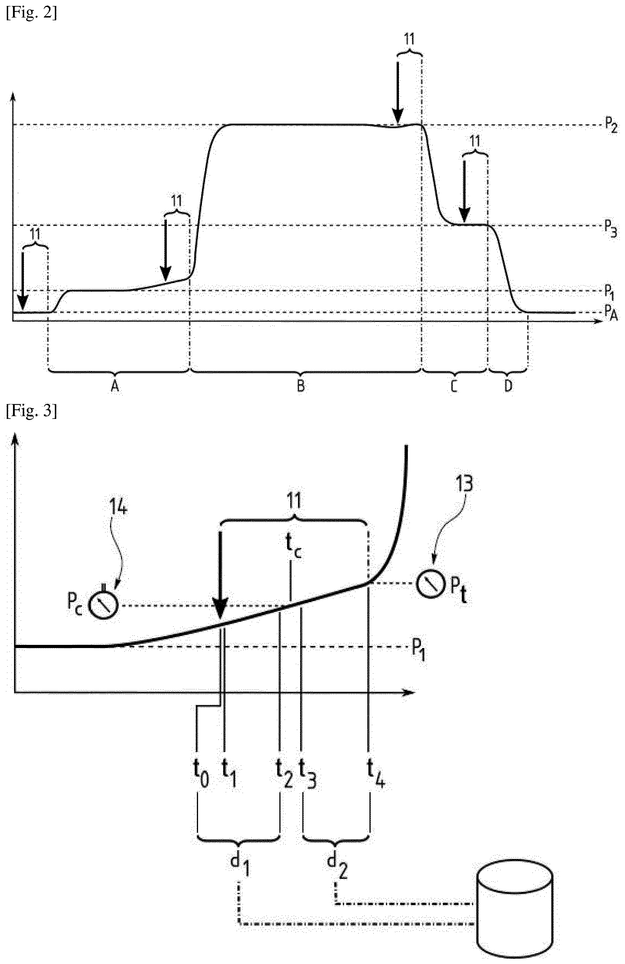

En référence à la figure 2, représentant un exemple d'une courbe théorique lors du formage d'un récipient 1 par soufflage au sein du dispositif 3 de formage selon l'invention, plusieurs étapes se succèdent, à savoir :
- une étape de présoufflage A : une première électrovanne de présoufflage est commandée par envoi à un premier instant t₀ d'un ordre d'activation de son distributeur 9, qui commande l'ouverture sa vanne 8 associée qui s'ouvre à un instant t₄ après un délai effectif 11 : la pression dans le circuit 7 passe alors de la pression atmosphérique PA à la pression de présoufflage P1 ;
- une étape de soufflage B :une deuxième électrovanne de soufflage est commandée par envoi à un autre premier instant t₀ d'un autre ordre d'activation de son distributeur 9, qui commande l'ouverture sa vanne 8 associée qui s'ouvre à un instant t₄ après un autre délai effectif 11 : la pression dans le circuit 7 passe alors de la pression de présoufflage P1 à la pression de soufflage P2 ;
- une étape de récupération C :une troisième électrovanne de récupération est commandée par envoi à encore un autre premier instant t₀ d'encore un autre ordre d'activation de son distributeur 9, qui commande l'ouverture de sa vanne 8 associée qui s'ouvre à un instant t₄ après encore un autre délai effectif 11 : la pression dans le circuit 7 passe alors de la pression de soufflage P2 jusqu'au seuil bas de la pression de récupération P3 ;
- une étape de dégazage D :une quatrième électrovanne de dégazage est commandée par envoi à encore un autre premier instant t₀ d'encore un autre ordre d'activation de son distributeur 9, qui commande l'ouverture de sa vanne 8 associée qui s'ouvre à un instant t₄ après encore un autre délai effectif 11 : la pression dans le circuit 7 passe alors de la pression de récupération à la pression atmosphérique PA.

On notera qu'avant ou après chaque contrôle de l'ouverture ou de la fermeture des électrovannes susmentionnées, on peut contrôler respectivement la fermeture ou l'ouverture de l'électrovanne précédemment actionnée.

En outre, le dispositif 3 de formage comprend au moins une unité 12 de contrôle contrôlant au moins l'un des différents composants susmentionnés. En d'autres termes, l'unité 12 de contrôle contrôle chacune des électrovannes en ouverture et en fermeture, préférentiellement l'activation et la désactivation du distributeur 9 associé.

Une telle unité 12 de contrôle peut être automatisée, notamment sous la forme d'un terminal informatique sur lequel est exécuté un logiciel adapté au contrôle du dispositif 3 de formage. L'unité 12 de contrôle peut être totalement ou partiellement déportée ou embarquée au niveau du dispositif 3 de formage.

En somme, le fonctionnement de chaque électrovanne est similaire et possède un délai effectif 11 qui lui est propre. Ce délai effectif 11 dépend, d'une part, du laps de temps d'activation ou de désactivation de son distributeur 9 et, d'autre part, du laps de temps d'ouverture ou de fermeture de sa vanne 8. En d'autres termes, le délai effectif 11 d'une électrovanne est fonction du temps de réponse d₁ du distributeur 9 et du temps de réponse d₂ de la vanne 8.

En cas de dysfonctionnement d'un de ces éléments, il est donc nécessaire de déterminer s'il s'agit du distributeur 9 ou de la vanne 8.

L'invention prévoit de déterminer quel élément d'une électrovanne est défaillant, en mesurant des pressions, d'une part, en sortie du circuit 7 de soufflage au niveau de la tuyère 5 et, d'autre part, directement au sein d'une électrovanne, entre le distributeur 9 et la vanne 8, au niveau de la conduite 10.

Plus avant, à partir ces mesures des pressions du flux d'air sous pression et du fluide pressurisé, il est possible de calculer un différentiel et de le comparer à des valeurs connues, préalablement enregistrées, qu'elles soient prévues théoriquement ou basées sur les réglages préalablement effectués. Dès lors, il est possible de déduire les temps de réponse d_{1,}d₂ pour le distributeur 9 et la vanne 8. Ainsi, en cas de dépassement d'un de ces temps de réponse d₁,d₂, il est possible de déterminer s'il s'agit du distributeur 9 ou de la vanne 8 qui est défaillant.

En d'autres termes, après le premier instant t₀ d'envoi du signal d'activation vers le distributeur 9 et que ce dernier délivre le flux pressurisé pour actionner sa vanne 8, on détermine la durée s'écoulant entre la mesure d'une pression P_{c} à l'intérieur de la conduite 10 et la mesure d'une pression Pₜ au niveau de la tuyère 5, à savoir connectée à l'intérieur de l'ébauche ou du récipient 1.

En outre, cette durée est déterminée en fonction de l'étape en cours, notamment par rapport à la pression correspondante, à savoir les pressions de présoufflage P₁, de soufflage P₂, éventuellement du seuil inférieur de la pression de récupération P₃ ou encore de la pression atmosphérique P_{A}.

Pour ce faire, au sein du dispositif 3 de formage selon l'invention, le circuit 7 comprend au moins un premier capteur 13 de pression au niveau de ladite tuyère 5, mesurant une première pression Pₜ. Ce premier capteur 13 peut aussi être positionné au niveau de la partie commune du circuit 7, communiquant directement avec l'intérieur de la tuyère 5, ou bien au sein de ladite tuyère 5, afin d'y mesurer la pression Pₜ. Un tel premier capteur 13 permet donc de détecter la présence d'une première pression Pₜ à l'intérieur de la tuyère 5, notamment d'en mesurer la valeur à un instant donné. Ce premier capteur 13 est donc positionné et apte à mesurer la pression à l'intérieur de la tuyère 5.

Avantageusement, le dispositif 3 de formage comprend au moins un deuxième capteur 14 de pression situé le long de ladite conduite 10. Ce deuxième capteur 14 mesure une deuxième pression P_{c} à l'intérieur de la conduite 10.

En outre, le deuxième capteur 14 peut être positionné le long de ladite conduite 10, en sortie du distributeur 9 ou en entrée de la vanne 8 associée. Ce deuxième capteur 14 est donc positionné et apte à mesurer la pression à l'intérieur de la conduite 10.

Selon différents modes de réalisation, le deuxième capteur 14 peut mesurer, soit la présence d'une deuxième pression P_{c} et il s'agit alors d'un capteur de détection la présence d'une pression dans ladite conduite 10, soit, de façon combinée ou non, la valeur de la deuxième pression P_{c} et il s'agit alors d'un capteur de mesure de la valeur d'une pression dans ladite conduite 10.

On notera que le premier capteur 13 peut être similaire au deuxième capteur 14, préférentiellement un capteur de mesure de la valeur d'une pression.

Dès lors, en mesurant la deuxième pression P_{c} entre le distributeur 9 et la vanne 8, il est possible d'obtenir une référence intermédiaire, en vue de déterminer si ces deux éléments fonctionnent correctement ou s'il l'un d'entre eux est défaillant.

Pour ce faire, l'unité 12 de contrôle comprend des moyens 120 de comparaison ou aptes à comparer au moins un différentiel entre la mesure de la première pression Pₜ et la mesure de la deuxième pression P_{c}. De tels moyens 120 de comparaison permettent donc de déduire, pour chaque électrovanne, un différentiel entre la première pression Pₜ dans la tuyère 5 suite à l'ouverture ou la fermeture de la vanne 8, et la deuxième pression P_{c} dans la conduite 10 suite à l'activation ou la désactivation du distributeur 9.

En particulier, la mesure de la première pression Pt par le premier capteur 13 permet de prendre en considération une fluctuation de la valeur de la pression à l'intérieur de la tuyère 5. En somme, le premier capteur 13 peut mesurer en continu la pression au niveau de la tuyère 5 et on effectue une comparaison lors d'une mesure d'un changement de la première pression Pₜ, suite à une mesure d'un changement de la deuxième pression P_{c} survenue juste auparavant.

Cette comparaison s'effectue en fonction du temps. En somme, on vérifie combien de temps s'écoule entre la détection de la deuxième pression P_{c} dans la conduite 10 et la détection de la première pression Pₜ dans la tuyère 5, notamment un changement de cette première pression Pₜ.

Selon un mode préféré de réalisation, les moyens 120 de comparaison comprennent alors des moyens de calcul temporel dudit au moins un différentiel entre un instant t₄ de la mesure de la première pression Pₜ et un instant t_{c} de la mesure de la deuxième pression P_{c}.

D'ores et déjà, on constate que l'instant t₄ de mesure de la première pression Pₜ correspond à la fin d'ouverture ou de fermeture de la vanne 8, moment à partir duquel l'air sous pression circule à l'intérieur du circuit 7 vers la tuyère 5 à la pression souhaitée PA,P1,P2,P3 en fonction de l'étape A,B,C,D correspondante.

Toutefois, l'instant t_{c} permet alors de savoir quand le distributeur 9 est entièrement activé ou désactivé et de ce fait, de savoir quand le fluide pressurisé circule à l'intérieur de la conduite 10 pour commencer à commander ladite vanne 8. Ainsi, comme on connaît le premier instant t₀ d'émission du signal envoyé pour l'activation ou la désactivation dudit distributeur 9, il est possible de déduire un instant t₂ correspondant à la fin de l'activation ou de la désactivation du distributeur 9.

On notera que l'instant t₁ peut correspondre à la réception du signal par ledit distributeur 9, permettant de prendre en considération une éventuelle latence connue et fixe, dépendant des moyens de communication mis en oeuvre entre l'unité 12 de contrôle et le distributeur 9. Par exemple, si l'unité 12 de contrôle est centralisée et distante, étant donné les temps très faibles, il est possible de prendre en considération la durée de transmission du signal entre le premier instant t₀ où il est émis et l'instant t₁ où il est reçu par le distributeur 9.

Ainsi, on peut obtenir un temps de réponse d₁ du distributeur 9, entre le premier instant t₀ et l'instant t₂, voir entre l'instant t₁ et l'instant t₂.

De surcroît, l'instant t_{c} permet aussi de savoir quand la vanne 8 commence à être commandée du fait que la conduite 10 est pressurisée. Ainsi, il est possible de déduire un instant t₃ correspondant au début de la commande d'ouverture ou de fermeture de la vanne 8. En d'autres termes, à l'instant t₃, le fluide pressurisé dans la conduite 10 commence à actionner le mouvement de la vanne 8 pour l'ouvrir ou la fermer.

On peut alors obtenir un temps de réponse d₂ de la vanne 8, entre l'instant t₃ et l'instant t₄.

Comme évoqué précédemment, l'instant t₄ correspond alors à la fin du mouvement d'ouverture ou de fermeture de la vanne 8.

La figure 3 montre un exemple d'une telle décomposition du délai effectif 11 d'une électrovanne mettant en évidence les différents instants t₀,t₁,t₂,t₃,t₄,t_{c}, permettant de déduire les temps de réponse d₁,d₂ du distributeur 9 et de la vanne 8.

On notera que, au sens de la présente invention, tous les instants de chaque étape, notamment les instants t₀,t₁,t₂,t₃,t₄,t_{c} pour chaque électrovanne, peuvent correspondre à des angles ou à des valeurs angulaires rapportés sur un cycle de formage de récipient par soufflage, notamment du fait que la machine de soufflage est rotative.

Par ailleurs, étant données les dimensions de la conduite 10 et la pression du fluide pressurisé y circulant sous l'action du distributeur 9, les instants t₂,t₃,t_{c} peuvent être sensiblement équivalents. Dès lors, l'instant t_{c} de la mesure de la deuxième pression P_{c} dans la conduite 10 permet de déterminer à quel instant t₂ le distributeur 9 est totalement activé ou désactivé et à quel instant t₃ la vanne 8 commence à s'ouvrir ou à se fermer. Une fluctuation de cet instant t_{c} permet alors de savoir si le distributeur 9 ou la vanne 8 possède un temps de réponse d₁,d₂ prolongé, voire raccourci, induisant un retard dans son délai de fonctionnement normal et connu.

A ce titre, en cas de dépassement d'un des temps de réponse d₁,d₂, on émet une notification de dépassement. Un tel dépassement peut être vérifié au travers des moyens 120 de comparaison de l'unité 12 de contrôle.

En particulier, une comparaison des temps de réponse d₁,d₂ peut être effectuée au regard de valeurs préenregistrées, sous forme de consignes. Le dépassement peut être constaté à partir d'une fluctuation des temps de réponse d₁,d₂ au-delà d'un seuil autour d'une des valeurs préenregistrées.

En outre, un tel enregistrement des valeurs de consignes peut être effectué au sein de l'unité 12 de contrôle, comme schématisé sur la figure 3.

Selon un autre mode de réalisation, une comparaison peut aussi être effectuée directement par rapport à l'instant t_{c}, par rapport à une valeur préenregistrée, pour en déduire les temps de réponse d₁,d₂, au regard notamment des instants t₀,t₄.

Dès lors, en cas d'un dépassement avéré, l'émission de ladite notification permet d'avertir un opérateur. La notification a pour but d'indiquer à l'opérateur qu'une électrovanne n'est plus capable d'assurer un fonctionnement normal, c'est-à-dire de s'ouvrir (et a priori de se refermer) dans un laps de temps, sans incidence sur la qualité du futur récipient 1 ou sur le bon fonctionnement global de la machine de soufflage. De plus, une telle notification peut donc indiquer quel composant d'une électrovanne est défaillant, à savoir la distributeur 9 ou la vanne 8 associée.

Selon un second aspect, l'invention concerne le traitement d'un corps creux par le dépôt d'une couche d'un matériau à effet barrière à l'intérieur d'un récipient 1.

Le récipient 1 est en matière plastique, préférentiellement du PET.

Un tel dépôt s'effectue au travers d'une « unité de dépôt d'une couche d'un matériau à effet barrière ». Plusieurs postes peuvent être réunis ensemble, notamment en périphérie d'un carrousel rotatif, formant alors une « unité de dépôt d'une couche d'un matériau à effet barrière ». Dans la suite de la description, on utilisera le terme « poste de dépôt » en remplacement du terme « unité de dépôt d'une couche d'un matériau à effet barrière » et le terme « unité de dépôt » en remplacement du terme « unité de dépôt d'une couche d'un matériau à effet barrière ».

Chaque poste de dépôt comprend un réceptacle sous forme d'une cavité 20, dans laquelle chaque récipient 1 est introduit, afin de subir une opération de dépôt de la couche du matériau à effet barrière sur la paroi interne du récipient 1.

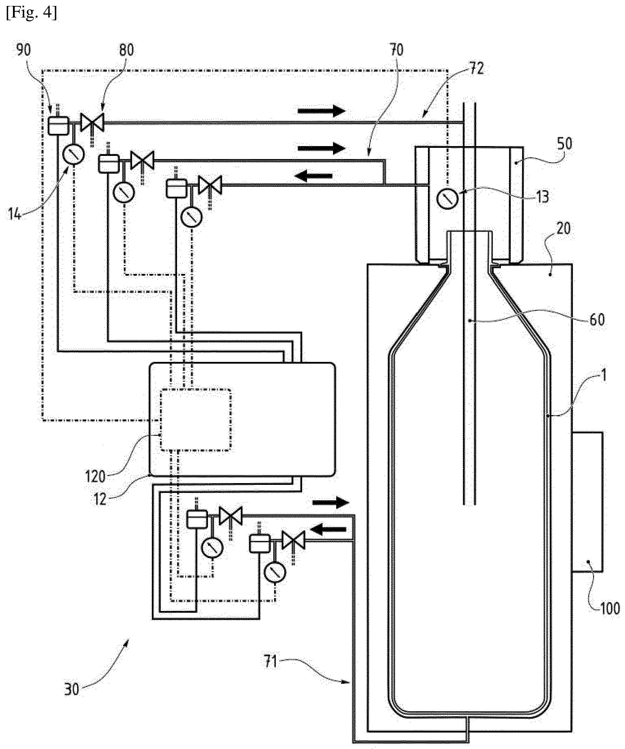

Sur la figure 4, un exemple de récipient 1 est représenté dans une cavité 20.

Afin d'assurer le dépôt, un dispositif 30 de dépôt comprend des moyens correspondants venant coopérer avec la cavité 20, recevant le récipient 1.

Plus avant, le dispositif 30 de dépôt comprend au moins une tuyère 50.

Plus avant, la tuyère 50 est montée mobile par rapport au poste de dépôt depuis une position haute et escamotée, dans laquelle le récipient 1 peut être introduit dans la cavité 20, vers une position basse venant coiffer le récipient de façon étanche avec la cavité 20, et inversement.

Une telle tuyère 50 s'apparente donc à une cloche venant recouvrir la partie supérieure de la cavité 20, pour permettre notamment d'enlever de l'air dans le récipient 1.

Le dispositif 30 de dépôt comprend un injecteur 60 monté mobile verticalement par rapport à la tuyère 50, depuis une position haute et escamotée, vers une position basse où l'extrémité distale de l'injecteur 60 n'est pas en contact avec le fond du récipient.

Cet injecteur 60 est une tige creuse par laquelle circule un fluide précurseur à l'état gazeux. Ce gaz précurseur est choisi parmi les alcanes, les alcènes, les alcynes, les aromatiques, ou une combinaison de certains d'entre eux. Cet injecteur 60 permet d'injecter une quantité nécessaire de gaz précurseur à l'intérieur du récipient pour réaliser un plasma.

Afin d'effectuer le dépôt à l'intérieure du récipient 1, le dispositif 30 de dépôt comprend au moins un circuit 70 et des moyens de mise en circulation (non représentés) selon au moins un sens d'au moins un flux d'air sous pression au sein dudit circuit 70. De préférence, plusieurs flux d'air de pressions différentes sont mis en circulation à différents moments au sein dudit circuit 70, selon un sens d'extraction et un sens d'injection.

En particulier, pour le dispositif 30 de dépôt, la ou les sources sont approvisionnées par des pompes.

Ledit circuit 70 est relié à la tuyère 50 et permet dans un sens l'extraction de flux d'air, à l'intérieur du récipient, et ledit circuit 70 est aussi relié à l'intérieur de la cavité 20 pour faire un vide à l'intérieur du récipient et également à l'intérieur de la cavité 20.

Puis avant d'extraire le récipient de la cavité, il est nécessaire de mettre l'intérieur du récipient et l'intérieur de la cavité à la pression atmosphérique.

L'exemple de la figure 4 montre deux circuits 70,71. Le circuit 70 est relié à la tuyère 50 et est pourvu d'une portion commune et de portions dédiées pour l'extraction de l'air pour faire le vide et pour la remise à la pression atmosphérique à l'intérieur du récipient 1. Le circuit 71 est relié à la cavité 20 et est pourvu d'une portion commune et de portions dédiées pour créer une dépression et pour la remise à la pression atmosphérique à l'intérieur de ladite cavité 20.

Un circuit 72 distinct peut être dédié à l'acheminement du gaz précurseur. Ce circuit 72 est alors relié à l'injecteur 60.

Des flèches montrent les sens de circulation de l'air le long de chacune desdites portions dédiées.

En outre, chacune des portions dédiées du circuit 70,71,72 est reliée à une source correspondante.

A ce titre, les moyens de mise en circulation permettent notamment de gérer l'ensemble des sources, la mise du ou des flux d'air à la pression correspondante.

Par ailleurs, afin d'autoriser ou non le passage dudit au moins un flux d'air, ledit au moins un circuit 70,71,72 comprend au moins une vanne 80, reliée en amont à ladite tuyère 50 ou du réceptacle 20 ou de l'injecteur 60. De plus, l'injecteur 60 est également relié à une source de gaz précurseur afin de permettre l'injection de ce dernier dans le récipient 1 une fois que le vide y a été réalisé.

L'exemple de la figure 4 montre un générateur de micro-onde 100 contiguë à la cavité 20.

Une fois, le gaz précurseur introduit à l'intérieur du récipient 1, le générateur de micro-onde 100 génère une onde électromagnétique propre à engendrer un plasma provoquant le dépôt d'un matériau à effet barrière sur la paroi intérieure du récipient 1.

Afin d'assurer le contrôle de ladite au moins une vanne 80, le dispositif 30 de dépôt prévoit des moyens adaptés permettant d'actionner chaque vanne 80 depuis une position fermée vers une position ouverte assurant la circulation du flux d'air, et inversement.

Pour ce faire, ledit dispositif 30 de dépôt comprend encore au moins un distributeur 90 de commande de ladite au moins une vanne 80. En particulier, chaque vanne 80 est pourvue d'un distributeur 90 associé à son fonctionnement.

On notera que le distributeur 90 est activé électriquement, notamment par l'intermédiaire d'un bobinage qui, sous l'action d'un courant électrique, bascule le distributeur 90 en position ouverte ou en position fermée, commandant réciproquement à la commande de la position de la vanne 80 associée.

Plus avant, chaque distributeur 90 commande sa vanne 80 de façon pneumatique, par transmission d'une commande pneumatique, sous forme d'une mise en circulation d'un fluide pressurisé. C'est ce fluide pressurisé qui, lorsque le distributeur 90 est activé électriquement et bascule en position d'ouverture, commande l'actionnement la vanne 80 vers sa position d'ouverture. Lorsque le distributeur 90 est désactivé, retournant en position de fermeture, le fluide pressurisé ne circule plus et la vanne 80 retourne en position fermée. Le fonctionnement inverse peut aussi être envisagé.

Un distributeur 90 est donc un pilote électro-pneumatique de la vanne 80 associée. Ainsi, un distributeur 90 et une vanne 80 forment alors un ensemble dit « électrovanne ». Une telle électrovanne est préférentiellement de type « tout ou rien », mais peut éventuellement être de type proportionnel.

En outre, afin de permettre la circulation du fluide pressurisé entre le distributeur 90 et la vanne 80, le dispositif 30 de dépôt comprend une conduite 10 reliant ledit distributeur 90 à ladite vanne 80 correspondante. Une telle conduite 10 est propre au fonctionnement de la vanne 80, située donc au sein de chaque électrovanne et en dehors du circuit 70 pour la circulation du ou des flux d'air sous pression dans le récipient 1.

Par analogie, les électrovannes fonctionnent de la même manière que ce soit pour le traitement de corps creux pour le formage d'un récipient 1 à partir d'une ébauche ou pour le dépôt de revêtement barrière réalisé à l'intérieur du récipient 1 par plasma sous faible pression.

L'invention concerne aussi un procédé de traitement de corps creux.

Tout d'abord, l'invention peut concerner un procédé de formage de corps creux sous forme de récipient 1 par soufflage à partir d'ébauche, notamment à partir d'une préforme 4.

Un tel procédé de formage est préférentiellement adapté à la mise en oeuvre du dispositif 3 de traitement appliqué au formage selon l'invention, tel que précédemment décrit.

Un tel procédé de formage comprend, de façon non limitative, les étapes suivantes.

Tout d'abord, on introduit une ébauche dans un moule 2 refermé par une tuyère 5 de soufflage.

Une fois l'ébauche positionnée dans le moule 2, on met en circulation un flux d'air sous pression vers l'intérieur de ladite tuyère 5 par actionnement d'au moins une vanne 8, reliée en amont à ladite tuyère 5.

Pour ce faire, on commande l'actionnement de ladite au moins une vanne 8 par un distributeur 9 associé. Un tel distributeur est relié à ladite vanne par une conduite 10. C'est donc à l'intérieur de cette conduite 10 que circule un fluide pressurisé qui induit l'ouverture de la vanne 8.

En outre, une telle vanne 8 peut revenir en position de fermeture en absence de fluide pressurisé au sein de ladite conduite 10, si le distributeur 9 est désactivé.

Comme évoqué précédemment, d'une part, l'air sous pression est mis en circulation vers la tuyère 5 pour effectuer le soufflage par l'intermédiaire d'un circuit 7. C'est sur ce circuit que chaque vanne 8 est positionnée, afin d'approvisionner la tuyère 5 en air sous pression. D'autre part, la vanne 8 est commandée par son distributeur 9 associé, par l'intermédiaire de la conduite 10 et de la mise en circulation d'un fluide pressurisé par ledit distributeur 9 : ladite conduite 10 étant donc distincte du circuit 7.

Plus avant, on mesure une première pression Pₜ au niveau de ladite tuyère 5.

Cette mesure de la première pression Pₜ permet de connaître à n'importe quel moment la pression à l'intérieur de la tuyère 5.

Avantageusement, on mesure une deuxième pression P_{c} à l'intérieur de ladite conduite 10.

Selon différents modes de réalisation, on peut mesurer ladite deuxième pression P_{c}, soit par détection de la présence d'une pression à l'intérieur de ladite conduite 10, soit par mesure de la valeur de ladite deuxième pression P_{c}.

Une fois la deuxième pression P_{c} mesurée, on calcule un différentiel entre la mesure de la deuxième pression P_{c} et la mesure de la première pression Pₜ.

Ensuite, en fonction dudit différentiel, on détermine un temps de réponse d₁ dudit distributeur 9 et un temps de réponse d₂ de ladite vanne 8.

De façon subsidiaire, il est possible de calculer des instants t₀,t₁,t₂,t₃,t₄ correspondants, afin d'appliquer une donnée temporelle pour déterminer lesdits temps de réponses d₁,d₂.

Ce sont alors ces temps de réponse d₁,d₂ qu'il est possible de vérifier, pour voir s'il l'un ou l'autre ne dépasse par un écart maximal admissible, notamment au regard des conditions de fonctionnement requises.

Préférentiellement, en cas de dépassement d'un des temps de réponse d₁,d₂, on émet une notification de dépassement. Cette notification permet d'avertir un opérateur, d'une part, d'une défaillance avérée d'une électrovanne et, d'autre part, s'il s'agit du distributeur 9 ou de la vanne 8 qui présente une défaillance. L'opérateur pourra alors prévoir une opération de maintenance en vue de changer l'un et/ou l'autre des composants défaillants.

Afin d'éviter toute maintenance injustifiée, en cas d'un dépassement provenant d'un écart ponctuel et non représentatif d'une détérioration d'une électrovanne, l'invention prévoit de déterminer une récurrence des dépassements d'un des temps de réponse d₁,d₂ pour chaque électrovanne. En somme, on prévoit de vérifier qu'un dysfonctionnement survient plusieurs fois sur une électrovanne, en particulier sur son distributeur 9 ou sa vanne 8, avant d'émettre une notification.

Pour ce faire, on enregistre à chaque cycle de formage les éventuels dépassements, pour n'émettre une notification qu'à partir d'un seuil maximal. Un tel enregistrement peut s'effectuer très rapidement, du fait des cadences très élevées de production, surtout dans le cas d'une installation de soufflage rotative pourvue d'un carrousel.

Ainsi, le procédé selon l'invention prévoit de comptabiliser successivement les dépassements d'un des temps de réponse d₁,d₂, puis d'émettre une notification des dépassements comptabilisés au-delà à partir d'un seuil maximal.

De façon similaire et correspondante, l'invention peut concerner un procédé de dépose de couche à effet barrière dans un récipient 1 placé dans une cavité 20.

Un tel procédé de dépôt est préférentiellement adapté à la mise en oeuvre du dispositif 30 de traitement appliqué au dépôt selon l'invention, telle que précédemment décrit.

Le dispositif et de le procédé de traitement selon l'invention permettent donc, au travers de la mesure d'une deuxième pression directement au sein d'une électrovanne, en positionnant un deuxième capteur 14 entre son distributeur 9,90 et sa vanne 8,80, d'en vérifier le bon fonctionnement, en particulier en comparant les temps de réponse d ₁,d₂ de ses composants par rapport à des valeurs consignes.

## Revendications

1. Dispositif (3,30) de traitement de corps creux, comprenant au moins :
- une tuyère (5,50) débouchant à l'intérieur d'un corps creux placé à l'intérieur d'un réceptacle ;
- au moins un circuit (7,70,71,72) et des moyens de mise en circulation selon au moins un sens d'au moins un flux d'air sous pression au sein dudit circuit (7,70,71,72) ;
ledit au moins un circuit (7,70,71,72) comprenant :
- au moins une vanne (8,80), reliée en amont à ladite tuyère (5,50) et/ou audit réceptacle ;
- au moins un premier capteur (13) de pression au niveau de ladite tuyère (5,50) ou au niveau dudit réceptacle, mesurant une première pression (Pₜ) ;
ledit dispositif de traitement (3,30) comprenant encore
- au moins un distributeur (9,90) de commande de ladite au moins une vanne (8,80) ;
- une conduite (10) reliant ledit distributeur (9,90) à ladite vanne (8,80) correspondante ;
- au moins une unité (12) de contrôle contrôlant au moins l'un des différents composants susmentionnés, ladite unité (12) de contrôle comprenant au moins un composant de mesure temporelle ;
**caractérisé par le fait qu'**il comprend :
- au moins un deuxième capteur (14) de pression situé le long de ladite conduite (10), mesurant une deuxième pression (P_{c}) à l'intérieur de ladite conduite (10) ;
et en ce que ladite unité (12) de contrôle comprend
- des moyens aptes à déterminer au moins un différentiel entre la mesure de la première pression (Pₜ) et la mesure de la deuxième pression (P_{c}) en fonction du temps.

2. Dispositif (3,30) de traitement selon la revendication précédente, **caractérisé par le fait que** ledit deuxième capteur (14) est un capteur de détection la présence d'une pression dans ladite conduite (10).

3. Dispositif (3,30) de traitement selon l'une quelconque des revendications précédentes, **caractérisé par le fait que** ledit deuxième capteur (14) est un capteur de mesure de la valeur d'une pression dans ladite conduite (10).

4. Dispositif (3,30) de traitement selon l'une quelconque des revendications précédentes, **caractérisé par le fait que** ladite unité (12) de contrôle comprend des moyens (120) aptes à comparer ledit différentiel en fonction du temps écoulé entre un première instant de la mesure de la première pression (Pₜ) et un deuxième instant de la mesure de la deuxième pression (P_{c}).

5. Dispositif (3,30) de traitement selon l'une quelconque des revendications précédentes, **caractérisé par le fait qu'**il comprend un moule (2) de soufflage dudit corps creux se présentant sous forme d'une préforme (4).

6. Dispositif (3,30) de traitement selon l'une quelconque des revendications 1 à 4, **caractérisé par le fait qu'**il comprend une cavité (20) de réception dudit corps creux se présentant sous forme d'un récipient.

7. Procédé de traitement de corps creux, dans lequel au moins :
- on introduit un corps creux dans un réceptacle refermé par une tuyère(5,50) ;
- on met en circulation un flux d'air sous pression vers l'intérieur de ladite tuyère (5,50) et/ou dudit réceptacle par actionnement d'au moins une vanne (8,80), reliée en amont à ladite tuyère (5,50) ou audit réceptacle ;
- on commande l'actionnement de ladite au moins une vanne (8,80) par un distributeur (9;90) associé, relié à ladite vanne (8,80) par une conduite (10) ;
- on mesure une première pression (Pₜ) au niveau de ladite tuyère (5,50) ;
**caractérisé en ce que**
- on mesure une deuxième pression (P_{c}) à l'intérieur de ladite conduite (10) ;
- on calcule un différentiel entre la mesure de la deuxième pression (P_{c}) et la mesure de la première pression (Pₜ) ;
- en fonction du différentiel, on détermine un temps (d₁) de réponse dudit distributeur (9,90) et un temps (d₂) de réponse de ladite vanne (8,80).

8. Procédé de traitement selon la revendication précédente, **caractérisé en ce qu'**on mesure la deuxième pression (P_{c}) par détection de la présence d'une pression à l'intérieur de ladite conduite (10).

9. Procédé de traitement selon l'une des revendications 7 ou 8, **caractérisé en ce qu'**on mesure la deuxième pression (P_{c}) par mesure de la valeur de ladite deuxième pression (P_{c}).

10. Procédé de traitement selon l'une quelconque des revendications 7 à 9, **caractérisé en ce qu'**en cas de dépassement d'un des temps de réponse (d _{1,}d₂), on émet une notification de dépassement.

11. Procédé de traitement selon la revendication précédente, **caractérisé en ce que**
- on comptabilise successivement les dépassements d'un des temps de réponse (d₁,d₂) ;
- on émet une notification des dépassements comptabilisés au-delà à partir d'un seuil maximal.

12. Procédé de traitement selon l'une quelconque des revendications 7 à 11, **caractérisé en ce qu'**il consiste en un procédé de formage de récipient par soufflage à partir d'ébauche placée dans un moule (2).

13. Procédé de traitement selon l'une quelconque des revendications 7 à 11, **caractérisé en ce qu'**il consiste en un procédé de dépose de couche à effet barrière à l'intérieur d'un récipient placé dans une cavité (20).

## Patentansprüche

1. Vorrichtung (3, 30) zur Behandlung von Hohlkörpern, welche mindestens umfasst:
- eine Düse (5, 50), die im Inneren eines Hohlkörpers mündet, der im Inneren eines Behältnisses angeordnet ist;
- mindestens einen Kreislauf (7, 70, 71, 72) und Mittel zur Umwälzung mindestens eines Druckluftstroms in mindestens einer Richtung innerhalb des Kreislauf (7, 70, 71, 72);
wobei der mindesten einen Kreislauf (7, 70, 71, 72) umfasst:
- mindestens ein Ventil(8, 80), das stromaufwärts mit der Düse (5, 50) und/oder mit dem Behältnis verbunden ist;
- mindestens einen ersten Drucksensor (13) an der Düse (5, 50) oder an dem Behältnis, der einen ersten Druck (Pₜ) misst;
wobei die Vorrichtung zur Behandlung (3, 30) weiterhin umfasst:
- mindestens einen Verteiler (9, 90) zur Steuerung des mindestens einen Ventils (8, 80);
- eine Leitung (10), die den Verteiler (9, 90) mit dem entsprechenden Ventil (8, 80) verbindet;
- mindestens eine Steuereinheit (12), die mindestens eine der verschiedenen oben erwähnten Komponenten steuert, wobei die Steuereinheit (12) mindestens eine Komponente zur Zeitmessung umfasst;
**dadurch gekennzeichnet, dass** sie umfasst:
- mindestens einen zweiten Drucksensor (14), der sich entlang der Leitung (10) befindet und einen zweiten Druck (P_{c}) im Inneren der Leitung (10) misst;
und dadurch, dass die Steuereinheit (10) umfasst:
- Mittel, die geeignet sind, mindestens eine Abweichung zwischen der Messung des ersten Drucks (Pₜ) und der Messung des zweiten Drucks (P_{c}) in Abhängigkeit von der Zeit zu bestimmen.

2. Vorrichtung (3, 30) zur Behandlung nach dem vorhergehenden Anspruch, **dadurch gekennzeichnet, dass** der zweite Sensor (14) ein Sensor zur Detektion des Vorhandenseins eines Drucks in der Leitung (10) ist.

3. Vorrichtung (3, 30) zur Behandlung nach einem der vorhergehenden Ansprüche, **dadurch gekennzeichnet, dass** der zweite Sensor (14) ein Sensor zur Messung des Wertes eines Drucks in der Leitung (10) ist.

4. Vorrichtung (3, 30) zur Behandlung nach einem der vorhergehenden Ansprüche, **dadurch gekennzeichnet, dass** die Steuereinheit (12) Mittel (120) umfasst, die geeignet sind, die Abweichung in Abhängigkeit von der Zeit, die zwischen einem ersten Zeitpunkt der Messung des ersten Drucks (Pₜ) und einem zweiten Zeitpunkt des Messung des zweiten Drucks (P_{c}) vergangen ist, zu vergleichen.

5. Vorrichtung (3, 30) zur Behandlung nach einem der vorhergehenden Ansprüche, **dadurch gekennzeichnet, dass** sie eine Blasform (2) zum Blasen des Hohlkörpers umfasst, der in Form eines Vorformlings (4) vorliegt.

6. Vorrichtung (3, 30) zur Behandlung nach einem der Ansprüche 1 bis 4, **dadurch gekennzeichnet, dass** sie einen Hohlraum (20) zur Aufnahme des Hohlkörpers umfasst, der in Form eines Behälters vorliegt.

7. Verfahren zur Behandlung von Hohlkörpern, wobei mindestens:
- ein Hohlkörper in ein Behältnis eingeführt wird, das durch eine Düse (5, 50) verschlossen ist;
- ein Druckluftstrom in Richtung des Inneren der Düse (5, 50) und/oder des Behältnisses durch Betätigung mindestens eines Ventils (8, 80) umgewälzt wird, das stromaufwärts mit der Düse (5, 50) oder mit dem Behältnis verbunden ist;
- die Betätigung des mindestens einen Ventils (8, 80) durch einen zugeordneten Verteiler (9, 90) gesteuert wird, der mit dem Ventil (8, 80) durch eine Leitung (10) verbunden ist;
- ein erster Druck (Pₜ) an der Düse (5, 50) gemessen wird;
**dadurch gekennzeichnet, dass**
- ein zweiter Druck (P_{c}) im Inneren der Leitung (10) gemessen wird;
- eine Abweichung zwischen der Messung des zweiten Drucks (P_{c}) und der Messung des ersten Drucks (Pₜ) berechnet wird;
- in Abhängigkeit von der Abweichung eine Reaktionszeit (d₁) des Verteilers und eine Reaktionszeit (d₂) des Ventils (8, 80) bestimmt werden.

8. Verfahren zur Behandlung nach dem vorhergehenden Anspruch, **dadurch gekennzeichnet, dass** der zweite Druck (P_{c}) durch Detektion des Vorhandenseins eines Drucks im Inneren der Leitung (10) gemessen wird.

9. Verfahren zur Behandlung nach einem der Ansprüche 7 oder 8, **dadurch gekennzeichnet, dass** der zweite Druck (P_{c}) durch Messung des Wertes des zweiten Drucks (P_{c}) gemessen wird.

10. Verfahren zur Behandlung nach einem der Ansprüche 7 bis 9, **dadurch gekennzeichnet, dass** im Falle einer Überschreitung einer der Reaktionszeiten (d₁, d₂) eine Überschreitungsbenachrichtigung gesendet wird.

11. Verfahren zur Behandlung nach dem vorhergehenden Anspruch, **dadurch gekennzeichnet, dass**
- nacheinander die Überschreitungen einer der Reaktionszeiten (d₁, d₂) registriert werden;
- eine Benachrichtigung über die Überschreitungen, die über einen maximalen Schwellenwert hinaus registriert wurden, gesendet wird.

12. Verfahren zur Behandlung nach einem der Ansprüche 7 bis 11, **dadurch gekennzeichnet, dass** es in einem Verfahren zum Blasformen von Behältern ausgehend von einem in einer Blasform (2) angeordneten Rohling besteht.

13. Verfahren zur Behandlung nach einem der Ansprüche 7 bis 11, **dadurch gekennzeichnet, dass** es in einem Verfahren zur Aufbringung einer Schicht mit Barrierewirkung im Inneren eines in einem Hohlraum angeordneten Behälters besteht.

## Claims

1. Device (3, 30) for treating hollowing bodies, comprising at least:
- a nozzle (5, 50) that opens into a hollow body placed inside a receptacle;
- at least one circuit (7, 70, 71, 72) and means for setting at least one pressurized airflow in circulation in at least one direction within said circuit (7, 70, 71, 72) ;
said at least one circuit (7, 70, 71, 72) comprising:
- at least one valve (8, 80) connected upstream to said nozzle (5, 50) and/or to said receptacle;
- at least one first pressure sensor (13) in the region of said nozzle (5, 50) or in the region of said receptacle, measuring a first pressure (Pₜ);
said treatment device (3, 30) also comprising
- at least one control distributor (9, 90) for said at least one valve (8, 80);
- a line (10) connecting said distributor (9, 90) to said corresponding valve (8, 80);
- at least one control unit (12) controlling at least one of the different abovementioned components, said control unit (12) comprising at least one time measurement component;
**characterized in that** it comprises:
- at least one second pressure sensor (14) situated along said line (10), measuring a second pressure (P_{c}) inside said line (10);
and **in that** said control unit (12) comprises
- means that are able to determine at least one differential between the measurement of the first pressure (Pₜ) and the measurement of the second pressure (P_{c}) as a function of time.

2. Treatment device (3, 30) according to the preceding claim, **characterized in that** said second sensor (14) is a sensor for detecting the presence of a pressure in said line (10).

3. Treatment device (3, 30) according to either one of the preceding claims, **characterized in that** said second sensor (14) is a sensor for measuring the value of a pressure in said line (10).

4. Treatment device (3, 30) according to any one of the preceding claims, **characterized in that** said control unit (12) comprises means (120) that are able to compare said differential as a function of the time that has passed between a first time at which the first pressure (Pₜ) is measured and a second time at which the second pressure (P_{c}) is measured.

5. Treatment device (3, 30) according to any one of the preceding claims, **characterized in that** it comprises a mold (2) for blow-molding said hollow body, which is in the form of a preform (4).

6. Treatment device (3, 30) according to any one of Claims 1 to 4, **characterized in that** it comprises a cavity (20) for receiving said hollow body, which is in the form of a container.

7. Method for treating hollow bodies, in which at least:
- a hollow body is introduced into a receptacle closed by a nozzle (5, 50);
- a pressurized airflow is set into circulation toward the inside of said nozzle (5, 50) and/or of said receptacle by the actuation of at least one valve (8, 80), which is connected upstream to said nozzle (5, 50) or to said receptacle;
- the actuation of said at least one valve (8, 80) is controlled by an associated distributor (9; 90), which is connected to said valve (8, 80) by a line (10);
- a first pressure (Pₜ) is measured in the region of said nozzle (5, 50);
**characterized in that**
- a second pressure (P_{c}) is measured inside said line (10) ;
- a differential between the measurement of the second pressure (P_{c}) and the measurement of the first pressure (Pₜ) is calculated;
- depending on the differential, a response time (d₁) of said distributor (9, 90) and a response time (d₂) of said valve (8, 80) are determined.

8. Treatment method according to the preceding claim, **characterized in that** the second pressure (P_{c}) is measured by detecting the presence of a pressure inside said line (10).

9. Treatment method according to either of Claims 7 and 8, **characterized in that** the second pressure (P_{c}) is measured by measuring the value of said second pressure (P_{c}) .

10. Treatment method according to any one of Claims 7 to 9, **characterized in that**, if one of the response times (d₁, d₂) is exceeded, an exceedance notification is output.

11. Treatment method according to the preceding claim, **characterized in that**
- the exceedances of one of the response times (d₁, d₂) are successively recorded;
- a notification of the exceedances counted above a maximum threshold is output.

12. Treatment method according to any one of Claims 7 to 11, **characterized in that** it consists in a method for shaping a container by blow-molding from a blank placed in a mold (2).

13. Treatment method according to any one of Claims 7 to 11, **characterized in that** it consists in a method for depositing a barrier-effect layer inside a container placed in a cavity (20).
